# EUROPEAN PATENT APPLICATION

(11) **EP 4 488 420 A1**
(43) Date of publication of application: **08.01.2025**
(21) Application number: 24183719.4
(22) Date of filing: 21.06.2024
(51) Int. Cl.: C25D 1/00, C25D 1/04, C25D 1/20

(54) **A DEVICE FOR ELECTROLYTIC PRODUCTION OF COPPER FOILS**

(30) Priority: 21.06.2023 CZ 20230241
(71) Applicant: Ceské vysoké ucení technické v Praze, 16000 Praha 6 (CZ); Electroforming s.r.o., 54901 Nové Mesto nad Metuji (CZ)
(72) Inventor: Vojtech, Luká, 54907 Nahorany (CZ); Dusek, Karel, 29001 Podebrady (CZ); Neruda, Marek, 50009 Hradec Králové (CZ); Bartosová, Katerina, 54901 Nové Mesto nad Metují (CZ); Veselý, Petr, 29413 Kladno - Krocehlavy (CZ); Vigner, Vojtech, 29413 Chocnejovice (CZ)
(74) Representative: Poljak, Michal

(57) **Abstract**

The device comprises an electrolyser, an anode basket (6) of said electrolyser being made of an insulator and the filling of said anode basket (6) being made of copper granulate (3) forming a directly soluble electrode of the electrolyser. The main active surface of each anode basket (6) is oriented vertically, is shaped according to the shape of the rotatable cathode roller (7) and is provided with an electrically conductive inert surface contact (9) on the rear side in the direction away from the cathode roller (7). The face (15) of the anode basket (6) is perforated and coated with a first filter layer (16) of non-woven fabric and an adjacent sedimentation pre-chamber (17), the face (19) of the pre-chamber (17) being perforated and coated with a second filter layer (18). An auxiliary inert anode (20) is provided at the bottom of the rotatable cathode roller (7). On the cathode roller (7), there is an auxiliary roller (12) for unwinding a strip (11) of copper foil through a rinsing tunnel (14) onto pulleys (13). The device comprises a galvanising current source (8) whose anode electric current has a cathode current density of 0.1 to 20 A/dm² . The device may also have several anode baskets (6).

## Description

### Field of technology

The invention relates to a device for production of copper foil, the device enabling direct recycling, i.e. reprocessing, of copper granulate, scrap, into the form of a thin copper foil. An embodiment of a device for production of special copper foil for use as the top layer of a roofing or facade covering such as tiles, shingles or stencils, is also provided.

### Background of the invention

Since the devices for production of copper foils known so far are closely related to the processing methods implemented by them; the background of the invention also deals with these methods.

Thin copper foil is normally produced in two main ways. The first way is a metallurgical process of casting copper into blanks and then rolling. The second method is an electrolytic production of copper foil, which is carried out by depositing dissolved copper in an electrolyser from an electrolyte onto, for example, a titanium rotatable cathode roller. In particular, an inert anode, for example titanium, coated with a reactive metal, is used in industry, and may be shaped to fit the cathode roller, for example a "DSA" - dimensionally stable anode, as indicated, for example, in utility model CN202482454U, or may be a plate-shaped anode, for example according to patent CN110396704B. The inert anode may also be made of other materials, for example lead alloy, as indicated in document JPH0428895A

Copper can also be added to the electrolyte by dissolving copper scrap, the electrolyte then being purified and filtered before entering the electrolyser, as specified for example in documents JPH0428895A or JP2014132106A.

The documents CN112921356A and CN109137001A describe the recycling of copper scrap into copper foil. The solution according to CN112921356A uses an inert anode and an input material in the form of a fine powder containing copper suspended in an alkaline electrolyte. The insoluble anode is made of DSA, graphite, platinum, etc. The electrolyte is mechanically stirred during the electrolysis process. The anode and cathode compartments may be separated by a membrane. The original input material, which is ground to a powder, is printed circuit boards, the output product may be copper foil or copper powder, separated on a cathode plate from titanium, copper, or DSA. The main object of protection according to CN109137001A is a system for filtering electrolyte with dissolved copper. The output of the process is an electrolytically produced copper foil. In the electrolytic bath, the input copper material is oxidised to copper oxide, which further yields copper sulphate. The copper sulphate solution is passed through filters and solid impurities are filtered out.

However, these solutions consist in dissolving the copper material and then electrolytically extracting it from solution to form a film. The disadvantage of these solutions is that the input copper material must first be completely dissolved or at least ground, see CN112921356A. The electrolyte is then purified by a filtration system to the desired composition. The anode is inert, it is not formed directly by the copper material. The input material cannot be directly poured and dosed into anode baskets.

Solutions are known wherein copper scrap forms a soluble anode in an electrolytic system and is electrodeposited to form a copper cathode. Thus, it is an electrorefining of bulk or lumpy material. The material is either formed in some way by pressing into a solid anode, see documents DE19643834C1, CN109267099A, or it is deposited in an anode basket, for example according to CN2732762Y, CN104630823A, US5985123A, or at the bottom of a bath formed by conductive material, see document CN104195592A. Another possibility is the solution where the copper scrap is first completely dissolved and then the copper is electrolytically extracted from the solution to form the cathode, see CN107502920A.

The patent DE19643834C1 relates to direct electrolytic refining of metal scrap into cathode form. A granulate from copper cables including plastic is compressed into a block which is then used as a conventional anode. The granulate is hot pressed at a pressure of 80 MPa. It is claimed that electrorefining can be carried out in a conventional way without the use of melting. The copper scrap is crushed and sorted to a purity of more than 98 %. 30 kg of copper granulate is pressed into a block with dimensions of 94x10x4 cm. The anode is protected by a fabric bag that catches the falling particles. This anode is purified by a conventional copper electrorefining process. The patent application CN109267099A also discloses a method for recycling copper scrap, wherein a sorted copper granulate is compressed into a block which is further used as an anode for purification by conventional electrorefining. The solution is not aimed at direct reprocessing of the bulk copper anode, granulate, into copper foil.

The solution according to CN2732762Y describes direct electrorefining of copper scrap, where the scrap is loaded into a wire frame basket which is lined with a terylene bag. Current is fed into the anode basket through a conductive copper plate and on to a conductive ring, for example made of stainless steel. The document CN104630823A deals with direct electrolysis of impure copper scrap. The scrap is placed in an anode frame, the cathode is a stainless steel or copper plate, and an acid electrolyte is used. In contrast to the use of a conventional anode, the anode material can be continuously replenished without stopping the process. The patent application US5985123A discloses a device for direct electrolysis of metal scrap. At least one pair of anode baskets is provided in an electrolysis bath. A shielding in the form of a grid is used to distribute the current evenly.

The patent application CN104195592A presents a solution wherein copper scrap is inserted into an electrolyser with a graphite anode forming the bottom of the electrolyser. The cathode is a copper sheet. The copper or brass material is processed into smaller pieces.

The main disadvantage of the solutions of DE19643834C1, CN109267099A, CN2732762Y, CN104630823A, US5985123A, CN104195592A, CN107502920A is that the product is only a semi-finished product, a pure copper cathode, not a copper foil.

The following are examples of anode basket solutions. The anode basket is usually conductive, chemically resistant, most often titanium. The document CN208055494U describes a basket made of titanium or a titanium alloy, DE7019380U exclusively of titanium, DE7310410U of titanium, CN212895056U of titanium frames, DE7245624U mainly of titanium and metal strips with a PVC plastic coating at the top of the basket to prevent ion leakage, EP0515008A2 of titanium, US5744013A of titanium and US6156169A also of titanium.

Other alternatives are a plastic basket coated with a layer of metal or a plastic basket using conductive parts to carry the electric current to the anode material.

The document RO105340B1 describes a methacrylate anode basket with a rubber pad on the bottom of the basket and perforated walls designed for nickel electrolysis. Current is applied to the nickel strip in the anode basket. However, the strip itself is consumed during electrolysis and must be replaced. Both nickel anodes and granulated anodes can be used and can be consumed without residue by this method.

The document CN2597489Y describes a silver electrolysis device consisting of a PVC frame with 12 mm diameter holes, an anode bag made of polyester fabric and a conductive anode plate made of titanium sheet which is placed inside the bag.

The document US5340456A describes a device consisting of a cylindrical formable anode basket made of electrically non-conductive plastic material (PE, PP, PVC), a conductive anticorrosion bar located in the anode basket and a conductive grid located in the anode roller basket.

The document DE7516858U describes a tubular plastic anode basket with a circular or polygonal cross section, a hanging bracket made of titanium, copper or copper alloy and coated with titanium.

The document DE7419564U describes non-conductive segments of the sides and underside of an anode basket and a titanium stand and titanium strips.

The document DE2336849A1 describes that a titanium anode basket can be replaced by a cheaper one made of plastic or plastic-coated metal. It talks about the advantages of not feeding the current directly through the anode basket and therefore there is less current loss, and the current distribution is more even. In particular, the design of the current feed is addressed, which consists of a copper tube formed into a rectangular 'U'.

The disadvantage of the titanium anode basket is a higher price of the titanium material used and also too large an active area of the anode implemented in this way.

According to the solutions of utility models CN204298494U, CN203498500U, the anode baskets may be differently shaped or shielded, as indicated by the solutions in, for example, DE7245624U, DE2260803A1, DE1920613U, US5744013A, US5776327A, DE202015006892U1, CN101855390B, US5938899A, US6569299B1, US8262873B2. These modifications of the anode baskets serve for optimal distribution of the current field and therefore also of the deposited copper.

The document CN204298494U describes a titanium anode basket, wherein the front side of the titanium mesh basket is curved, convex, and the rear wall of the basket is a straight titanium mesh. In this case, however, the deposition is not on a rotatable cathode roller but on a planar cathode.

The utility model CN203498500U presents a titanium anode basket curved into an arc, in the shape of the letter "J". This shaping increases the conductive area of the anode and therefore, for the same current value, reduces the current density. No further details of the anode material, cathode shape or electrolyser arrangement are given.

The disadvantage of these shaped anode baskets according to CN204298494U and CN203498500U is mainly the material, which is titanium. Its disadvantage is mainly high price. Moreover, the anode basket designed in this way does not allow to limit the total active area of the anode formed by the copper granulate, or rather the sum of the surfaces of the individual granulate grains that are in the active part of the electrolytic scene.

In the document US5628892A, the anode is shaped to follow the shape of the cathode roller. The anode is composed of individual fixed but movably connected segments, so that it can be shaped into an arc. However, the anode is inert, the individual segments being made of a metallic material coated with a metal of the platinum group or an oxide thereof.

The disadvantage of this solution is that the anode is inert. It is not designed for direct electrolysis of bulk anode material.

The solution according to DE7245624U and DE2260803A1 is a titanium anode basket which is designed as a closed basket where ion permeation is undesirable. The lattice structure of the wall is coated with a plastic coating at these points. This is a conductive, mainly titanium, basket. The basket is not specially shaped, so the electric field is not optimally distributed around the cathode roller.

DE1920613U describes a U-shaped and perforated titanium anode basket.

The document US5744013A is an anode basket with lattice walls of titanium or similar metal which is divided into individual segments by partitions. The partitions are rotatable, so that the layout can be easily changed. The granulate can be placed in only some of the basket partitions or distributed in varying quantities into the individual basket partitions as required.

According to the document US5776327A, the anode basket is equipped with a masking made of non-conductive plates. These are fixed to the frame and their position can be changed as required. They serve to adjust the electric field distribution between the anode and the cathode. The document DE202015006892U1 is also based on a similar principle of non-conductive screens in front of the anode basket.

In CN101855390B, the key point is the self-passivating metal shielding, the solution is given for either a conventional anode or an anode basket.

The document US5938899A presents a more complicated solution for an anode basket. It consists of both conductive and non-conductive materials. The current is applied to an electrically conductive grid. The anode basket is not specially shaped into an arc or the like.

The document US6569299B1 describes a circular anode cup in which anode material is deposited. The solution still passes through a membrane to trap larger particles of material. Both the anode cup and the anode membrane have a central opening. The anode cup and cathode are arranged horizontally.

The documents US8262873B2 and US20100206735A1 describe an anode arrangement wherein the anode body comprises a soluble anode material. A shielding is provided covering at least a portion of the anode body and comprising a self-passivating metal electrically coupled to the anode body and allowing electrolyte transport therethrough. This shielding may consist of one or more layers, wherein at least one layer has apertures of not more than 2 mm or the apertures of at least one layer are at least partially covered by the metal of another layer. A further embodiment is an anode shielding basket. The self-passivating metal is titanium, etc. It is not a plastic anode basket.

The disadvantage of the above solutions of DE1920613U, US5744013A, US5776327A, DE202015006892U1, CN101855390B, US5938899A, US6569299B1, US8262873B2 and US20100206735A1 is mainly that the anode basket is of regular shape, mostly cuboid. It is not specially shaped, so the distribution of the electric field for deposition on a rotatable cathode roller is not optimally designed. Electrolyser solutions with the addition of auxiliary electrodes are known. Moreover, the anode basket so designed does not allow to limit the total active surface of the anode formed by the copper granulate, or rather the sum of the surfaces of the individual granulate grains that are in the active part of the electrolytic scene.

The documents US20100116672A1 and US20140144781A1 use auxiliary electrodes to optimize ion flow. The patent US6899803B2 uses a cell with an auxiliary secondary cathode. At the auxiliary cathode, excess oxidized material is reduced, thereby reducing the formation of metal ions to be deposited.

In the patent US7727364B2, an auxiliary electrode is in the form of a ring that follows the circular shape of the electrolyser bath and is protected by a membrane tube.

As the claimed device is adapted in one embodiment for production of special copper foils for roofing, the following describes how tiles, shingles or stencils with copper foil have been produced so far.

A copper foil produced by rolling is used for production of the currently available roofing material, bitumen shingles with a metal foil on the surface. The process of manufacturing copper foil by rolling involves a number of processes. First, it is cast into blanks. Either pure copper material is used for the casting process, or, if copper scrap is used, as in the present invention, it must still be purified by metallurgical processes during the melting process. After melting and casting into blanks, the rolling process is followed by the following steps: grinding of the blanks, heating, hot rolling, cooling, grinding, cold rolling, annealing, passivation and final rolling.

The resulting product, produced in the existing way on existing installations, is a smooth copper foil which, when applied, can be curved below the edge of the roofing, usually only on the exposed edges. The curved edge is solid.

### Summary of the invention

The above disadvantages are eliminated by a device for electrolytic production of copper foils according to the present invention. The device comprises a copper material hopper, a mill with a separator, a rinsing block and a conveyor. The device also comprises an electrolyser having: an anode basket; an electrolyte; and a rotatable cathode roller. The device also comprises galvanising current sources and a plurality of means for separating the strip of copper foil from the rotatable cathode roller. The underlying idea of the invention is that the copper material placed in the hopper consists of sorted cable or other copper waste. The outlet of the hopper is connected to the inlet of the mill with the separator, the outlet of which with a granulate is connected via a rinsing block and a conveyor to the inlet of at least one anode basket made of an insulator, whose granulate filling directly forms the soluble anode of the electrolyser. The main active surface of each of the used anode baskets is oriented vertically and is shaped according to the shape of the rotatable cathode roller. On the back side of the anode basket, an electrically conductive inert surface contact is formed in the direction of the cathode roller and connected to the galvanising current source. The face of the anode baskets is perforated and is coated with a first non-woven filter layer and an adjacent sedimentation pre-chamber, the face of which is perforated with a very low masking ratio and is coated with a second non-woven filter layer. At the bottom of the rotatable cathode roller, there is an auxiliary inert anode connected to the rotatable cathode roller to provide galvanizing current. On the cathode roller there is an auxiliary roller for winding a strip of copper foil through a rinsing tunnel onto pulleys connected to the galvanising current source. The anodic electric current of the galvanising current source has a cathodic current density of 0.1 to 20 A/dm² .

In one possible embodiment, the inputs of the galvanising current sources may be connected to the output of a renewable energy source.

In another possible embodiment, extending the possibilities of use of the device, the rotatable cathode roller is provided with a masking of insulating material on its surface in the longitudinal and/or transverse direction, which defines the resulting shape of the strip of copper foil which is guided via pulleys to the inlet of a separation block. This makes it possible to extend the device and adapt it to the production of flexible roofing or facade coverings. In this case, the outlet of the separation block, consisting of separated sections of copper foil with anchoring elements in the form of teeth, is fed into a reinforcement block for the production of a template, where the separated section is provided with a flat reinforcement. The output, consisting of a sandwich of the flat reinforcement with the separated section of the copper foil with teeth, is fed into a press, the output of which is an assembly of flexible roofing or facade covering.

Known devices typically operate as follows. The input copper material is dissolved into a solution - an electrolyte. The electrolyte is then filtered as required, particularly if the input material contains impurities. From the electrolyte, the copper is then deposited in the form of a foil, typically on a rotatable cathode roller. An inert anode is used which can be shaped to follow the shape of the rotatable cathode roller.

In the present invention, the input copper material need not be dissolved in a solution first, but directly forms the anode in the electrolytic system. The material is poured into the anode basket and in a preferred embodiment can be automatically continuously replenished. The shape and arrangement of the anode baskets follow the shape of the cathode roller.

From the known solutions of anode baskets used for various electrolytic processes, no similar solution has been found, i.e. a plastic anode basket with an arc shape of the submerged part of the basket, with shielding, perforations, geometrically distributed according to the specific needs of a particular deposition process, with an electric current supply to the conductive plate on the back wall of the basket, with a pre-chamber of the anode basket for better cleaning from sludge.

The advantage of the present invention of anode baskets is therefore a cheaper and easily processible material. Furthermore, it is an advantage that the current is not fed directly through the titanium anode basket, but to the conductive inert surface contact on the back of the basket. The main dissolution of the copper granulate occurs on the front side of the anode basket and the bulk anode shape thus appears as a homogeneous object with respect to the electrochemical system. The arrangement allows for efficient dissolution of the copper granules, without causing passivation of their surface due to too large an anode surface or the formation of large amounts of sludge.

The foil is mechanically bent at the bottom of the flat reinforcement of the template in the known solution and in the present invention. The difference is in the design of the edge of the foil for bending underneath the flat reinforcement of the template, wherein in the present invention, this edge is made as a shaped edge, wherein the teeth on the edges are bent underneath the flat reinforcement of the template. This results in material savings and a better adaptation to the substrate material, the edge does not tend to curl, and the application possibilities of the templates made in this way, easy cutting, shaping, etc., are increased quite substantially. Compared to the known prior art for the production of copper foils for roofing, the advantage of the present invention is that it completely omits, in particular, the energy-intensive step of melting the input material and the numerous other mechanical processing steps. The copper scrap is cleaned, successively filled into anode baskets and deposited directly into the form of copper foil in one step.

So far, the known solutions do not offer direct recycling, reprocessing, of copper waste into a product form, as it is possible in the present invention, where the scrap is fed into anode baskets and at the same time deposited in the form of a metal foil using an acidic electrolyte.

The main advantage of the present invention compared to the prior art is the direct recycling of copper scrap into the form of a copper foil, where the scrap forms directly the soluble anode of the electrolytic system and can be continuously replenished. Additional intermediate steps such as, in particular, melting, which is typical for commonly used methods, or electrolytic reprocessing to form the cathode, as presented in some of the patents cited, are eliminated. The advantage over a similar analogous process in, for example, the patent application CN112921356A is that the recycled material does not need to be ground to a powder form, the material is itself directly a soluble anode. The patent application CN109137001A proposes first to dissolve the recycled material completely and then presents, in particular, a system for filtering the solution thus obtained, which is rather complicated. A similar solution is also the subject of the patent applications JPH0428895A and JP2014132106A. In neither of these solutions does the input metal scrap directly form a soluble anode, which fills, and in a preferred embodiment, is continuously replenished into the anode baskets.

The proposed anode baskets are made of a relatively inexpensive material, polypropylene, which makes the proposed system significantly cheaper and simpler to manufacture than the most commonly used titanium basket. The current is applied to a conductive inert surface contact, such as a titanium plate located on the inside of the rear wall of the basket, which is in contact with the copper anode material packed in the basket. This arrangement also effectively prevents passivation of the anode material. The shape and arrangement of the anode baskets follows the cylindrical shape of the cathode roller, which optimises the current distribution. The current distribution and thus the copper deposition, i.e. the resulting thickness distribution of the deposited film, can be controlled by changing the perforation distribution of the front side of the plastic basket.

The advantage is therefore mainly the overall arrangement of the electrolytic scene. The anode material is directly dissolved and deposited in the form of a film, the anode baskets are shaped to follow the shape of the cathode roller, an auxiliary inert anode is used and possibly also shaped masking on the edges of the cathode roller. The anode basket is plastic, has a tailored shape, a perforated front wall lined on the inside with a non-woven fabric, a titanium anode plate on the inside of the rear wall of the basket, to which the electric current is applied. The basket is also fitted with a pre-chamber.

### Description of the drawings

The present invention will be further described by means of drawings. Fig. 1 shows a block diagram of the entire device, where the anode basket, cathode roller and electrolyte container assembly are shown in cross-section. Fig. 2 shows a detail of the anode basket, again in cross-section. Figs. 3A and 3B show examples of masking of the cathode roller.

### Examples

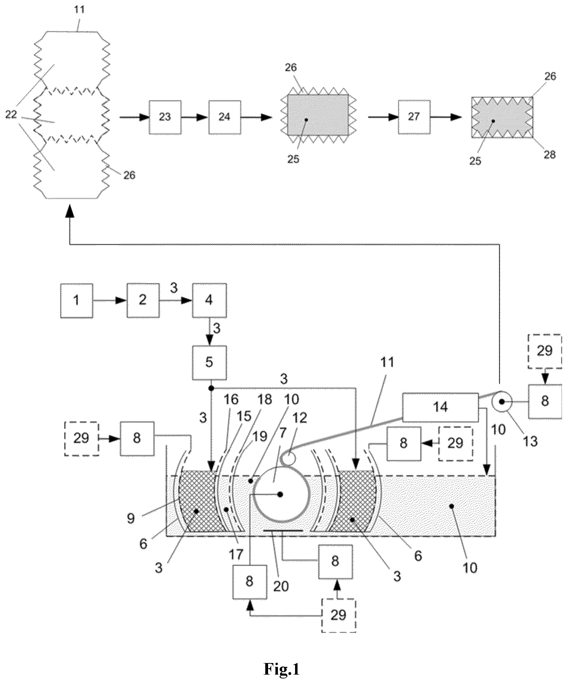

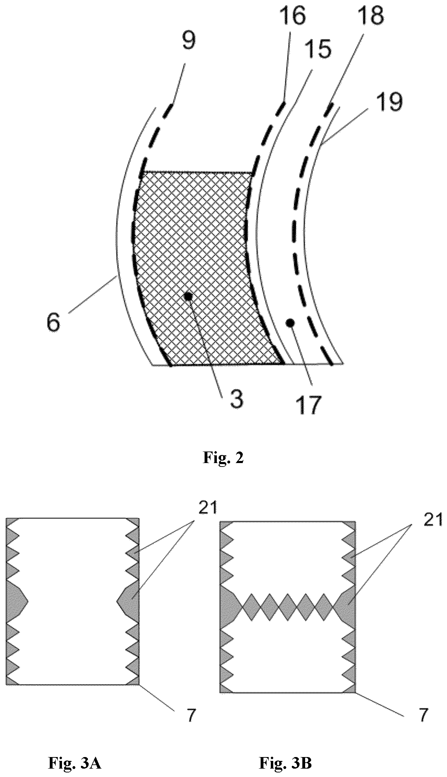

The device for electrolytic production of copper foils according to the present invention will be further described according to the scheme of Fig. 1. The device comprises a copper material hopper 1 connected via a mill 2 with a separator, a rinsing block 4 and a conveyor 5 with an input of at least one anode basket 6 of an electrolyser, the electrolyser comprising an electrolyte 10 and a rotatable cathode roller 7. The copper material placed in the hopper 1 is formed by sorted cable or other copper waste. The main active surface of the anode baskets 6 is oriented vertically and is shaped to form an arc of the cathode roller 7. There is at least one anode basket 6. If one anode basket 6 is used, it is formed in a U-shape around a drum of the cathode roller 7. In the example according to Fig. 1, two anode baskets 6 are shown. The anode basket 6, the detail of which is shown in Fig. 2, is made of an insulator and the granulate filling 3 thereof directly forms the soluble anode of the electrolyser. On the rear side of the anode basket 6 in the direction away from the cathode roller, there is an electrically conductive inert surface contact 9, which is connected to a galvanising current source 8. The face 15 of the anode basket 6 is perforated and is provided with a first filter layer 16 of non-woven fabric and an adjacent sedimentation pre-chamber 17, the face 19 of which is perforated with a very low masking ratio and is coated with a second filter layer 18 of non-woven fabric. In the lower part of the rotatable cathode roller 7, an auxiliary inert anode 20 is arranged, connected together with the rotatable cathode roller 7 to the galvanising current source 8. On the cathode roller 7, an auxiliary roller 12 is arranged for unwinding a strip 11 of copper foil through a rinsing tunnel 14 onto pulleys 13 connected to the galvanising current source 8. The anodic electric current of the galvanising current source 8 has a cathodic current density of 0. 1 to 20 A/dm² . The inputs of the galvanising current source 8 may be connected to the output of a renewable energy source 29.

The sorted cable or other pure copper waste placed in the hopper 1 is ground in the mill 2 with a non-metallic particle separator into copper granulate 3 with a size of 0.01 to 10 mm. The granulate 3 is gradually fed directly by the screw conveyor 5 into the anode baskets 6 made of an insulator, for example polypropylene, after rinsing from slip or other impurities in the rinsing block 4.

The copper granulate 3 directly forms the soluble anode of the electrolytic system. The anode baskets 6 are shaped according to the shape of the rotatable cathode roller 7, connected to the galvanising current source 8, whose anode electric current has a cathode current density of 0.1 to 20 A/dm². The anode current is applied to an electrically conductive, inert, for example titanium or lead, surface contact 9 located on the rear side of the anode basket 6 or anode baskets 6, the rear side being in direct contact with the seeded copper granulate 3. The electric current passes successively through the copper granulate 3, due to which the potential gradient between the surface contact 9, the grains of the copper granulate 3 and the cathode roller 7 increases in the electrolyte environment 10. The anode material is gradually dissolved and deposited on the rotatable cathode roller 7, here made of stainless steel. The cathode roller 7 is only partially immersed in the electrolyte 10 and above the bath level, the strip 11 of copper foil is then continuously torn away from the cathode roller 7.

Thanks to the proposed arrangement, the main dissolution of the copper granulate 3 occurs on the front side of the anode basket 6 and the bulk anode material thus appears as a homogeneous object with respect to the electrochemical system. This arrangement and material composition of the anode baskets 6 allows complete direct electrochemical recycling, reprocessing, of the copper granulate 3 into a strip 11 of copper foil having a thickness of 0.01 to 10 mm. This copper strip 11 is continuously separated from the rotatable cathode roller 7 by means of an auxiliary roller 12 and pulleys 13, which pull the strip of copper foil 11 out of the electrolyser compartment through a rinsing tunnel 14, where the strip is periodically sprayed with demineralised water, which rinses the residual electrolyte 10 back into the working compartment and at the same time replenishes the evaporated water from the electrolyte. At the same time, the pulleys 13 serve as a collector for the passing electric current from the cathode roller 7 to the galvanising current source 8. In addition, the passing electric current heats the strip 11 of copper foil between the electrolyte 10 and the pulleys 13, thereby drying the drawn strip 11 of copper foil without additional energy requirements, the drying also being aided by the stack effect or additional drying air nozzles in the rinsing tunnel 14.

This arrangement essentially prevents the generation of operational waste generated during rinsing, as the rinsed demineralized water and the residues of the rinsed electrolyte flow back into the electrolyser compartment. The arrangement of the anode baskets 6 allows for efficient dissolution of the copper granulate grains 3, without passivation of their surface or the formation of higher amounts of sludge due to too large anode surface area. This effect is achieved by the use of masking or perforating the face 15 of the anode baskets 6, which reduces the relative surface area of the entire anode, formed in this arrangement only by the holes in the perforated face of the anode baskets 6 and the grains of copper granulate 3 thus electrochemically accessible therein. By this arrangement, the total area of the anode is adjusted relative to the functional area of the cathode roller 7. Thus, by the size, number, geometry and distribution of the holes in the face 15 of the anode baskets 6, the necessary electrochemical arrangement of the entire system can be adjusted for a proper anode/cathode area ratio of 3:1 to 1:1 and also the distribution of the anode current field in the electrolyser or electrolyte space 10.

In order to prevent the sludge produced by dissolving the copper granulate grains 3 from entering the electrolyte 10, the perforated face 15 of the anode basket 6 is provided with a flat first filter layer 16 made of a non-woven fabric such as polypropylene. When the copper granulate 3 is periodically added to the anode basket 6, pressure is exerted on the previous contents of the anode basket 6, i.e. on the previously placed granulate 3, and this pressure can cause the sludge retained in the first filter layer 16 to be displaced. For this reason, the anode basket 6 further comprises a sedimentation pre-chamber 17 with a second filter layer 18 made of a non-woven fabric, for example polypropylene. The face 19 of the sedimentation pre-chamber 17 is again perforated, but with a very low masking ratio and therefore only a minimal area of the face 19 of the sedimentation pre-chamber 17 of the anode basket 6 is impermeable.

In order to be able to process copper granulate 3 with different grain sizes, it is advisable to adjust the perforation of the face 15 of the anode basket 6 at the interface of copper granulate 3 - first filter layer 16 - face 15 with an excess of unmasked area so that the total effective area of the anode to the area of the cathode is in the ratio of 2.5 : 1. This will lead, in particular in the processing of fine grained copper granulate 3, to an increase in the relative anode area above the proven anode/cathode ratio and an increase in the concentration of copper ions in the electrolyte 10. In order to stabilise the concentration, i.e. to process these excess ions, the system is provided with an auxiliary insoluble, inert, anode 20, for example made of titanium, which is preferably located at the bottom of the rotatable cathode roller 7, between the anode baskets 6. By adjusting the galvanising currents between the anode baskets 6 and the auxiliary anode 20, the entire system can be stabilized to the desired productivity and the concentration of copper ions in the electrolyte 10 can be maintained at a desired level.

The electrochemically deposited copper on the not fully embedded, horizontally mounted cathode roller 7 is gradually separated to form an endless strip 11 of copper foil, which is gradually pulled out of the electrolyser by pulleys 13, while through this strip 11 of copper foil and pulleys 13, the cathode roller 7 is simultaneously connected to the galvanising current sources 8.

In a preferred embodiment, the drum of the slowly rotatable cathode roller 7 is provided with a masking 21 of an insulator, for example polypropylene, which defines the resulting shape of the strip 11 of copper foil on the electrically conductive surface of the cathode roller 7. Examples of such masking are shown in Figs. 3A and 3B. The masking 21 is implemented in the longitudinal and possibly also in the transverse direction, thus allowing to adjust the geometry of the shapes, the longitudinal masking, or the production length of the copper foil section 22, the transverse masking, for the continuously produced strip 11 of copper foil. The individual sections 22 of the desired production length are subsequently separated from the strip of copper foil 11 in a waste-free, straight or shaped cut in the separation block 23. The copper foil thus produced is used, for example, in the manufacture of roofing or facade coverings.

The individual sections 22 of the strip 11 of copper foil are subsequently provided in the reinforcing block 24 by pressing, melting, injection moulding or the like with a flat reinforcement 25 of recycled plastics, polymer foils, asphalt strips or other suitable materials. In a further step, a layout of teeth 26, realised by the masking 21, is bent by an advancing tool in the press 27 over the edges of the flat reinforcement 25, thereby ensuring reliable mechanical long-term cohesion of the assembly 28 of the flat reinforcement 25 - section 22 of the strip 11 of copper foil. This results in an even higher degree of anchoring. The assembly 28 thus realised is a roofing template which, thanks to the anchoring teeth 26 used, allows easy shaping during its application, easy cutting when shortening or shaping of the roofing template is required. The teeth 26 on the edges can be made into different variations of shapes, examples being triangular, trapezoidal, semi-circular, rectangular or square shapes with different spacing.

The product, being the assembly 28, is then shipped and ready for use.

For heating the electrolyte and for powering the galvanising current sources 8, energy from renewable sources 29 can be advantageously used. The entire system is configured to vary the electrical power supplied, and the system can operate over a wide dynamic range of copper deposition rates on the rotatable cathode roller 7, depending on the power output of the renewable sources 29, and thus the amount of galvanising current supplied to the anode baskets 6. A suitably sized system can thus handle even peak surplus power in the grid.

### Industrial Applicability

The invention can be used especially by copper foil producers or copper scrap processors, in devices where copper waste is generated in the production process. An example of the end use of copper foil is as a component - a top layer - of roofing materials.

### List of Reference Signs

- 1: hopper
- 2: mill with separator
- 3: copper granulate
- 4: rinsing block
- 5: screw conveyor
- 6: anode basket
- 7: cathode roller
- 8: galvanising current source
- 9: surface contact
- 10: electrolyte
- 11: copper strip
- 12: auxiliary roller
- 13: pulleys
- 14: rinsing tunnel
- 15: anode basket face
- 16: first filter layer
- 17: sedimentation pre-chamber
- 18: second filter layer
- 19: sedimentation pre-chamber face
- 20: auxiliary inert anode
- 21: masking
- 22: part of a strip of copper foil
- 23: separating block
- 24: reinforcing block
- 25: surface reinforcement
- 26: teeth
- 27: press
- 28: assembly
- 29: renewable energy source

## Claims

1. A device for electrolytic production of copper foils, comprising a hopper (1) for copper material, a mill (2) with a separator, a rinsing block (4), a conveyor (5) and an electrolyser, the electrolyser comprising an anode basket (6), a container for an electrolyte (10) and a rotatable cathode roller (7), wherein the device further comprises galvanising current sources (8) and a plurality of means for separating a strip (11) of copper foil from the rotatable cathode roller (7), **characterized in that** the copper material to be placed in the hopper (1) comprises copper waste, preferably sorted cable copper waste, wherein the outlet of the hopper (1) is connected to the inlet of the mill (2) with a separator for grinding the copper waste into a granulate (3), wherein the outlet of the mill (2) with the separator for diverting the granulate (3) is connected via the rinsing block (4) and the conveyor (5) to the inlet of at least one anode basket (6) made of an insulator, wherein the anode basket (6) is designed to contain the granulate (3) filling as a soluble anode of the electrolyser, wherein the main active surface of the anode basket (6) is oriented vertically, is shaped according to the shape of the rotatable cathode roller (7) and comprises an electrically conductive inert surface contact (9) connected to the galvanising current source (8) on the rear side in the direction away from the cathode roller (7), wherein the face (15) of the anode basket (6) is perforated and contains a first non-woven filter layer (16) and an adjacent sedimentation pre-chamber (17), the face (19) of the pre-chamber (17) being perforated and coated with a second non-woven filter layer (18), and wherein, at the bottom of the rotatable cathode roller (7), there is an auxiliary inert anode (20) connected together with the rotatable cathode roller (7) to the galvanising current source (8), wherein an auxiliary roller (12) is arranged on the cathode roller (7) for unwinding a strip (11) of copper foil through a rinsing tunnel (14) onto pulleys (13) connected to the galvanising current source (8), wherein the anode electric current of the galvanising current source (8) has a cathode current density of 0.1 to 20 A/dm² .

2. The device according to claim 1, **characterized in that** the inputs of the galvanizing current sources (8) are connected to the output of a renewable energy source (29).

3. The device according to claim 1 or 2, **characterized in that** the rotatable cathode roller (7) comprises on its surface in the longitudinal and/or transverse direction a masking (21) of insulating material which defines the resulting shape of the strip (11) of copper foil, the strip (11) being guided via pulleys (13) to the inlet of a separation block (23).

4. The device according to claim 3, **characterized in that** the output of the separation block (23) is arranged in a reinforcing block (24), the output of which is arranged in a press (27).
